Europäisches Patentamt

European Patent Office

Office européen des brevets

(11) Publication number: **0 012 400**
**B1**

(12) **EUROPEAN PATENT SPECIFICATION**

(45) Date of publication of patent specification: **17.08.83**

(51) Int. Cl.³: **G 01 N 3/08**

(21) Application number: **79105013.1**

(22) Date of filing: **08.12.79**

(54) **A method and apparatus for thermodynamically determining the elasto-plastic limit stress.**

(30) Priority: **18.12.78 IT 3095478**

(43) Date of publication of application:
**25.06.80 Bulletin 80/13**

(45) Publication of the grant of the patent:
**17.08.83 Bulletin 83/33**

(84) Designated Contracting States:
**CH DE FR GB NL**

(56) References cited:
**BE - A - 842 706**
**US - A - 2 775 886**
**US - A - 3 906 783**

(73) Proprietor: **Bottani, Carlo E.**
**Via Pianell 55**
**Milan (IT)**

(73) Proprietor: **Caglioti, Giuseppe**
**Via Postale Vecchia 21**
**Luvinate (Varese) (IT)**

(73) Proprietor: **Novelli, Antonio**
**Via Beruto 1**
**Milan (IT)**

(72) Inventor: **Bottani, Carlo Enrico**
**Via Pianell 55**
**I-20162 Milan (IT)**
Inventor: **Caglioti, Giuseppe**
**Via Postale Vecchia 21**
**I-21020 Luvinate (Varese) (IT)**
Inventor: **Novelli, Antonio**
**Via Beruto 1**
**I-20131 Milan (IT)**
Inventor: **Ossi, Paolo Maria**
**Via Pacini 24**
**I-20131 Milan (IT)**
Inventor: **Rossitto, Franco**
**Via G.A. Amadeo 26/1**
**I-20133 Milan (IT)**
Inventor: **Silva, Giusepe**
**Viale Santuario 3**
**I-20030 Seregno (Milan) (IT)**

Courier Press, Leamington Spa, England.

**0 012 400**

(74) Representative: **Racheli, Adele
   Viale San Michele del Carso, 4
   I-20144 (Milan) (IT)**

## A method and apparatus for thermodinamically determining the elasto-plastic limit stress

This invention relates to a method of determining the limit of elasticity in (metal) structural materials, the associated apparatus used. Particularly, the invention aims to determine a parameter qualifying the elasto-plastic properties of a material.

In structure design, the goal is to specify the boundary between elastic and plastic behaviour in materials. Due to operative problems, which are solved by the present invention, the so-called yield point is commonly referred to. The standard for specifying such parameter is based on stress-strain UNI characteristic curve ($\sigma$—$\varepsilon$) and varies depending on the nature of the material. Two typical cases should be pointed out.

I) There is a sharp change in slope of the characteristic curve ($\sigma$—$\varepsilon$) in this case, the yield point coincides with that stress corresponding to the point of largest change in slope.

II) The slope of the characteristic curve ($\sigma$—$\varepsilon$) continuously varies, tending to become zero at plastic zone: in this case, said yield point is conventionally obtained as that stress which corresponds to a permanent deformation of 0.2% of the initial test length. In such a case, a straight line is drawn parallel to the tangent at the origin of the curve ($\sigma$—$\varepsilon$), and passing through the point of the coordinates having a deformation $\varepsilon=0.2\%$ and allotting to stress $\sigma_{0.2}$ intercepted by such a straight line on the curve ($\sigma$—$\varepsilon$) the significance of yielding point.

Particularly, in this second case, which is the most common case, the standard appears to be doubtful. Moreover, due to the difficulty in specifying the direction of the tangent at the origin of the curve ($\sigma$—$\varepsilon$), the slope of which continuously varies particularly in austenitic stainless steels, the inherent uncertainty in these tests may lead to the provision of structures which are stressed either too much or too little, since in a great deal of materials a thus defined yielding point is localized quite far away from the region exhibiting an elastic behaviour.

This could influence costs and even safety in most serious cases.

On the other hand, it is known that during tensile tests, variations occur in the specimen temperature, in addition to changes in load and deformation. Particularly, a study published in the name of D. Ronnpagel following the priority date of this application (J. Phys. E: Sci, Instrum., Vol. 12 1979) teaches the possibility of using such variations in temperature in order to quantitatively distinguish the thermic energy developed by mechanical deformation during the stationary plastic condition following the thermo-elastic cooling. However, the problem was never dealt with to assure whether and to which extent said variations in temperature are in mutual relationship with the characteristics of elastoplastic transition.

The Belgian Patent BE—A—842706 explains that the deformed areas of a specimen get heated. It is therefore proposed to observe the heated specimen with a tele camera sensitive to infra-red rays, so as to detect the isotherms and in this way get information on the local proceeding state of a given test, for example the beginning of a breakage, the position of the reduction area, the tension distribution on the specimen.

Particularly, but not exclusively referring to case II), it is the primary object of the apparatus according to the present invention to univocally establish the stress relating to the limit between small elastic deformations and plastic deformations, $\sigma\theta$.

Thus, in design calculations, lower factors of safety than those commonly used can be allotted without undue risk, providing structures which are of higher safety as well.

For instance when a specimen is deformed in tension it undergoes these phenomena:

(a) an initial cooling in elastic condition; and

(b) a subsequent heating as soon as plastic condition are reached following said initial elastic condition.

At isoentropic elastic condition the reduction in temperature which is substantially homogeneous both inside and in the surface, is due to the reduction in vibrational entropy which has to equalize the increase in configurational entropy associated with mechanical expansion.

At plastic condition the increase in temperature—which is also substantially homogeneous for small plastic deformations and in the absence of significant faults—is due to the rise of microplasticity phenomena associated with the motion as a whole of structural microfaults (point defects, dislocations).

After extended and careful studies, it was found that, excepted for rare and anyhow rationally acceptable exclusions, just at the limit between the conditions conventionally classified as elastic and plastic conditions, the curve of the specimen surface temperature shows a minimum, beyond which at the beginning of the plastic condition, a sudden rise occurs. Therefore, at such a rise the limit is suitably localized between "small" deformations—elastic condition- and "significant" deformations—plastic condition.

The above specified object has been accomplished as specified in Claims 1 and 4.

The invention will be more clearly understood with reference to an exemplary embodiment shown in the accompanying drawings, in which:

Fig. 1 is a circuit diagram of a device according to the present invention;

Fig. 2 is a schematic view of a material testing machine fitted with the apparatus according to the present invention;

Fig. 3 is a diagram showing the stress and temperature versus time; and

Fig. 4 is a diagram of stress versus time and temperature.

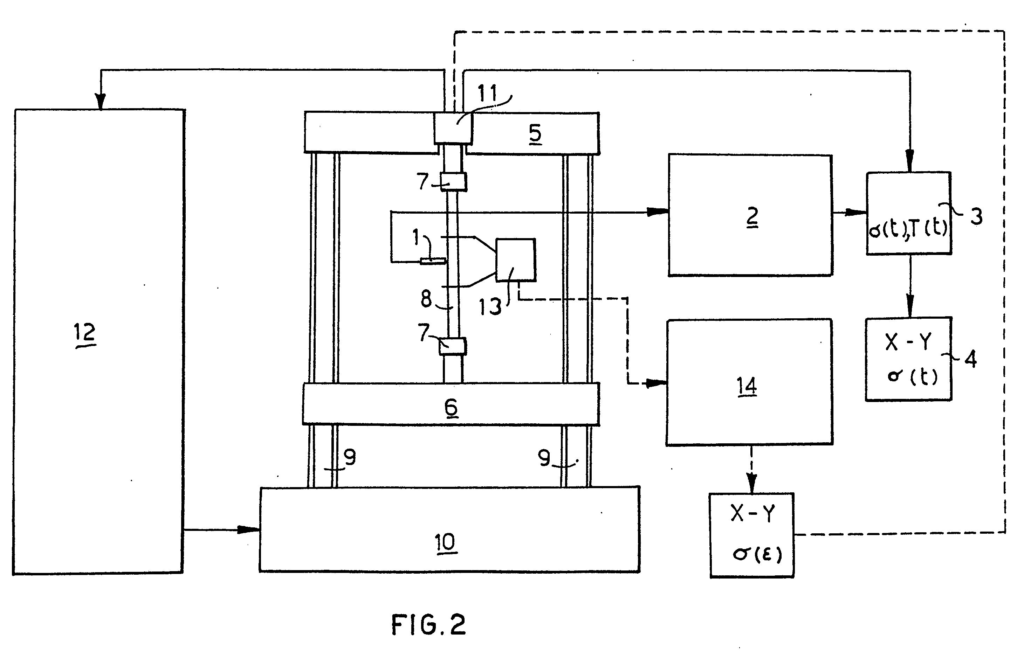

As shown in Fig. 2, the material testing machine comprises a stationary cross-head 5 and a movable crosshead 6, each of which are provided with gripping means 7 for a specimen 8. Reference numeral 9 designates the driving screws, whereas reference numeral 10 denotes the controlled motor and reduction gear. The load is sensed by a loading cell 11 supplying the data to sampling oscilloscope 3 and drive console 12, further comprising a loading recorder. A standard material testing machine could comprise a sensor 13 for deformation ($\varepsilon$) which supplies the signals to a second electronic resistance-voltage transducing system 14, the latter developing a diagram $\sigma(\varepsilon)$ with the data derived from said loading cell 11.

The elements 13 and 14 may be removed in the loading test according to the present invention, but could as well be maintained while not disturbing the measurements at all.

The elements of the apparatus cooperating as a whole with the material testing machine are, as above mentioned, the following:

a) Temperature sensor 1. The thermosensitive element comprises a miniaturized type of bare bead, negative coefficient of temperature (NTC) thermistor having a maximum diameter of about 0.5 mm. The temperature-resistance characteristic curve of such sensors can be approximated by the relation:

$$R(T) = a \ exp(B/T)$$

wherein a and B are constants and T is the temperature.

The transducer is in thermal contact with the surface of the specimen to be mechanically stressed by a drop of silicone oil, affording a good electrical insulation and also a good heat conductivity.

b) An electronic resistance-voltage transducing system 2. When the dependence of the thermistor resistance on temperature is known through the experimental calibration curve, the apparatus hereinafter described enables to follow the temporal evolution of the temperature for the stressed specimen, recording it continuously. For a thermodynamic determination of the limit of elasticity, a resolving power in the order of $10^{-2}$°C would suffice.

This allows the use of a simple D.C. bridge method.

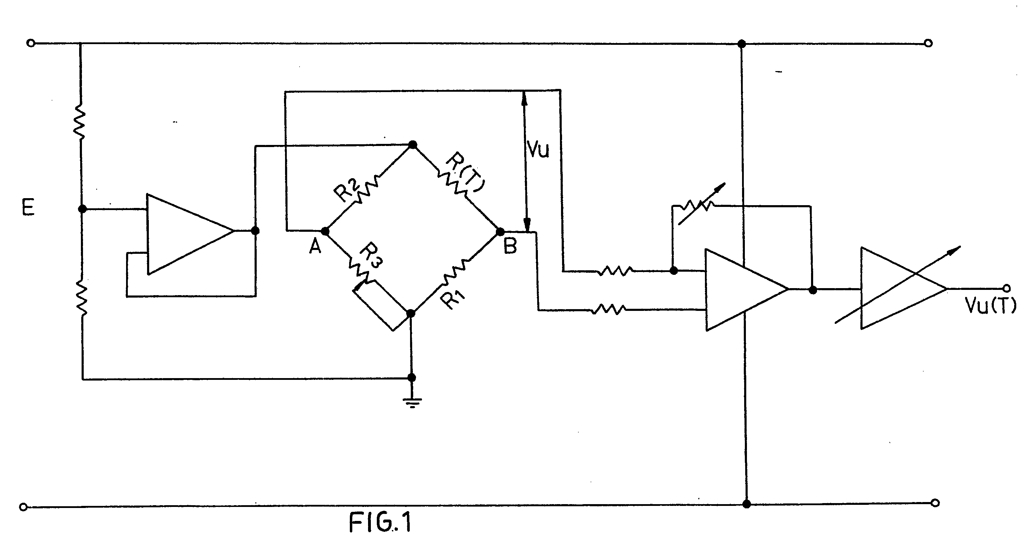

Referring to Fig. 1, R(T) is the thermistor resistance $R_1$ and $R_2$ are two fixed resistances and $R_3$ is a varying resistance, the value of which is adjusted so as to make zero the bridge output at temperature $T_0$, about which the small variations will be measured. The bridge diagonal is supplied at constant voltage E. As temperature T varies, at the terminals A and B of the other diagonal a voltage signal

$$V_B - V_A = V(T) - V_A = v_u$$

is available which, once amplified, is recorded as measurements are being taken.

c) A recording system. It consists of a sampling oscilloscope 3 and a pen recorder XY designated at 4.

In real time such an oscilloscope receives the signals from said loading cell $\sigma(t)$ and thermistor T(t); when converted into digital form, such signals are stored in the oscilloscope memory. At the oscilloscope output, such signals are subjected to digital-analogue reconversion. The analogical signals T and $\sigma$ join respectively in the recorder channels X and Y.

The not strictly necessary use of the sampling oscilloscope allows to follow and record the pattern of the variables $\sigma$ and T as a function of time, as the latter variable cannot be otherwise included in recording XY.

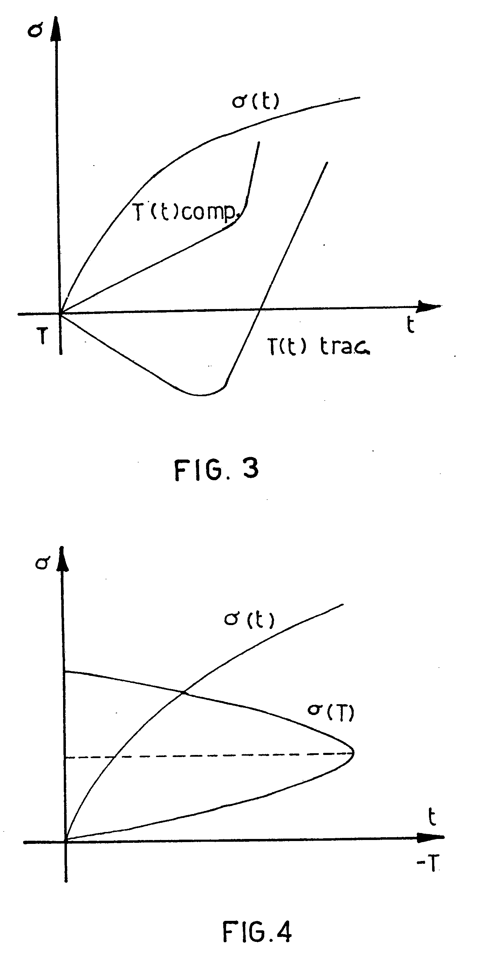

When considering Fig. 2, the modalities of use can be readily deduced. It is only necessary to combine a conventional tensile test with a temperature measurement of high sensitivity, resolution and rapidity, and to record stress and temperature by means of the apparatus above described. First, curves $\sigma(t)$ and T(t) are provided, that is the curves for stress and temperature in function of time (Fig. 3), then curve $\sigma(T)$ is provided, that is the curve for the stress in function of the temperature (Fig. 4); and the minimum of temperature trac. T(t) is sensed for traction tests, or the sudden variation comp. T(t) for compression tests; on the traction curve it can be clearly specified the reversal point of the temperature curve, with the yielding point made corresponding thereto.

When using the curve $\sigma(T)$, if the specimen is deformed in tension the stress corresponding to the minimum temperature is determined; if the specimen is deformed in compression the stress corresponding to the value of temperature at the bend or knee is determined.

Where the definite sensing of temporal pattern of stress and temperature signals is of no interest, by removing said sampling oscilloscope the strain $\sigma$ in function of temperature T can be directly recorded on recorder XY.

Alternatively, it is also possible as a principle to replace said recorder XY with an electronic analogue-digital conversion system supplying for the stress and temperature two series of associated numbers; in such a case the system provides for automatically specifying the minimum temperature value, with which the corresponding stress value should be associated. Particularly, by suitable software the derivative could be calculated and the stress could be specified as corresponding to a sudden variation in temperature.

## Claims

1. A method of determining the elasto-plastic limit stress (epls), according to which a specimen is deformed and the corresponding stress is measured, characterized by sensing the surface temperature of the specimen and by assuming as elasto-plastic limit stress (epls) that value of the stress which corresponds to a sudden variation in said temperature and which is indicative of the yielding point.

2. A method according to Claim 1, characterized by determining the stress and temperature curves as functions of time and by assuming as elasto-plastic limit stress (epls)

— in the case where the specimen is deformed in tension, the stress at the time corresponding to the minimum of the temperature curve, whilst
— in the case where the specimen is deformed in compression the stress at the time corresponding to the bend or knee of the temperature curve.

3. A method according to Claim 1, characterized by determining the stress curve as a function of temperature and by assuming as elasto-plastic limit stress (epls):

— in the case where the specimen is deformed in tension, the stress corresponding to the minimum temperature, and
— in the case where the specimen is deformed in compression, the stress corresponding to the value of temperature at the bend or knee of said stress curve.

4. A material testing apparatus designed for carrying out the method as claimed in any preceding claim, comprising a system for building up and sensing a traction or compression stress applied to a specimen, characterized by being provided with a sensor (1) for the surface temperature of the specimen (8), connected with a device for determining the variations in temperature (T).

5. An apparatus according to Claim 4, characterized in that said temperature sensor (1) is in thermal contact with the specimen surface through a fluid which is a good heat conductor and of good electrical insulation.

6. An apparatus according to Claim 5, characterized in that said fluid is silicone oil.

7. An apparatus according to Claims 4, 5 or 6, characterized in that the device for determining the variations in temperature comprises a sampling oscilloscope (3) providing a temperature curve as a function of time [T(t)].

8. An apparatus according to Claims 4, 5 or 6, characterized in that the device for determining the variations in temperature T provides a temperature curve as a function of stress [T($\sigma$)].

9. An apparatus according to Claims 4, 5 or 6, characterized in that the device for sensing the variations in temperature comprises an electronic analogue-digital conversion system providing for the stress and temperature two series of associated numbers.

10. An apparatus according to Claim 9, characterized in that the derivative of the two series of associated members is calculated and thus the stress corresponding to the sudden variation in temperature.

## Revendications

1. Méthode pour déterminer l'effort limite élasto-plastique (epls) selon laquelle on procède à la déformation d'un échantillon et on mesure l'effort correspondant, caractérisée en ce qu'on détermine la température de la surface de l'échantillon et qu'on considère comme un effort limite élasto-plastique (epls) la valeur de l'effort correspondant à une brusque variation de la température, et qui est indicative du point de déformation plastique.

2. Méthode selon la revendication 1 caractérisée en ce qu'on détermine l'effort et les courbes de température comme des fonctions du temps et en considérant comme effort limite élasto-plastique (epls):

— au cas où l'échantillon serait déformé sous tension, l'effort au moment correspondant au minimum de la courbure de température, tandis que
— aus cas où l'échantillon serait déformé sous compression, l'effort au moment correspondant au pliage ou genou de la courbure de température.

3. Méthode selon la revendication 1, caractérisé en ce qu'on détermine la courbure de l'effort comme une fonction de température et on considère l'effort limite élasto-plastique (epls):

— au cas où l'échantillon serait déformé sous tension, l'effort correspondant à la température minimum et
— au cas où l'échantillon serait déformé sous compression, l'effort correspondant à la valeur de température à la courbure ou genou de ladite courbure de l'effort.

4. Appareil pour des essais de matériels, destiné à effectuer la méthode comme revendiquée dans une quelconque des revendications précédentes, comprenant un système destiné à créer et déterminer une condition de sollicitation par traction ou compression appliqué à un échantillon, caractérisé en ce qu'il est pourvu d'un capteur (1) de température de la surface de l'échantillon (8) relié à un dispositif apte à déterminer les variations de la température (T).

5. Appareil selon la revendication 4, caractérisé en ce que le capteur (1) de la température est en contact thermique avec la surface de l'échantillon au moyen d'un fluide bon conducteur thermique et isolant électrique.

6. Appareil selon la revendication 4, caractérisé en ce que ledit fluide est l'huile de silicone.

7. Appareil selon les revendications 4, 5 ou 6, caractérisé en ce que le dispositif destiné à déterminer les variations de température est constitué par un oscilloscope d'échantillon (3) qui réalise une courbe de température en fonction du temps [T(t)].

8. Appareil selon les revendications 4, 5 ou 6, caractérisé en ce que le dispositif destiné à déterminer les variations de température T fournit une courbe de température en fonction de l'effort [T($\sigma$)].

9. Appareil selon les revendications 4, 5 ou 6, caractérisé en ce que le dispositif destiné à determiner les variations de la température comprend un système de conversion analogue-digital électronique qui fournit pour l'effort et al température deux séries de numéros associés.

10. Appareil selon la revendication 9, caractérisé en ce qu'on calcule la dérivée des deux séries de nombres associés et donc l'effort correspondant à la variation soudaine de la température.

**Patentansprüche**

1. Methode zum Bestimmen der elastoplastischen Grenzbeanspruchung (epls), nach der ein Muster verformt und die entsprechende Beanspruchung gemessen wird, dadurch gekennzeichnet, daß die Oberflächentemperatur des Musters bestimmt und als elastoplastische Grenzbeanspruchung (epls) der Wert der Beanspruchung in Betracht gezogen wird, der einer plötzlichen Veränderung dieser Temperatur entspricht und den Streckgrenzpunkt angibt.

2. Methode nach Anspruch 1, dadurch gekennzeichnet, daß die Beanspruchung und die Temperaturkurven als Zeitfunktion bestimmt und als elastoplastische Grenzbeanspruchung (epls)

— sofern das Muster unter Spannung verformt wird, die dem Zeitpunkt der kleinsten Temperatur-kurve entsprechende Beanspruchung und
— sofern das Muster unter Druck verformt wird, die dem Zeitpunkt der Biegung oder der Krümmung der Temperaturkurve entsprechende Beanspruchung
betrachtet wird.

3. Methode nach Anspruch 1, dadurch gekennzeichnet, daß die Beanspruchungskurve als Temperaturfunktion bestimmt und als elastoplastische Grenzbeanspruchung

— sofern das Muster unter Spannung verformt wird, die der Mindesttemperatur entsprechende Beanspruchung und
— sofern das Muster unter Druck verformt wird, die dem Temperaturwert bei der Biegung oder der Krümmung der Beanspruchungskurve entsprechende Beanspruchung
betrachter wird.

4. Gerät für Materialprüfungen zur Durchführung der in einem der vorstehenden Ansprüche beanspruchten Methode mit einem System zum Schaffen und Bestimmen des an einem Muster durchgeführten Zug- und Druckbelastungszustandes, dadurch gekennzeichnet, daß das Gerät mit einem Musteroberflächentemperaturfühler (1) versehen ist, der mit einer Vorrichtung zum Bestimmen der Temperaturveränderungen (t) verbunden ist.

5. Gerät nach Anspruch 4, dadurch gekennzeichnet, daß der Temperaturfühler (1) über ein gut leitfähiges elektrisch isoliertes Fluid mit der Musteroberfläche in thermischer Berührung ist.

6. Gerät nach Anspruch 5, dadurch gekennzeichnet, daß das Fluid Silikonöl ist.

7. Gerät nach den Ansprüchen 4, 5 oder 6, dadurch gekennzeichnet, daß die Vorrichtung zum Bestimmen der Temperaturveränderungen aus einer Oszillator- oder Oszilloskop-Probenahmevorrichtung (3) besteht, die ein Temperature in Funktion der Zeit [T(t)] verwirklicht.

8. Gerät nach den Ansprüchen 4, 5 oder 6, dadurch gekennzeichnet, daß die Vorrichtung zum Bestimmen der Veränderungen der Temperatur (T) eine Temperaturkurve in Funktion der Beanspruchung [T($\sigma$)] liefert.

9. Gerät nach den Ansprüchen 4, 5 oder 6, dadurch gekennzeichnet, daß die Vorrichtung zum Bestimmen der Veränderungen ein elektronisches analogisch-digitales Umwandlungssystem umfaßt, das für die Beanspruchung und Temperatur zwei Reihen von assoziierten Zahlen liefert.

10. Gerät nach Anspruch 9, dadurch gekennzeichnet, daß die Ableitung der beiden Reihen von assoziierten Zahlen und somit die der plötzlichen Temperaturveränderung entsprechende Beanspruchung errechnet wird.

FIG.1

FIG.2

FIG. 3

FIG.4